(19) Europäisches Patentamt
European Patent Office
Office européen des brevets

(11) Veröffentlichungsnummer: **0 019 751**
**A1**

(12) # EUROPÄISCHE PATENTANMELDUNG

(21) Anmeldenummer: **80102446.4**

(22) Anmeldetag: **06.05.80**

(51) Int. Cl.³: **C 07 F 9/40**

(30) Priorität: **09.05.79 DE 2918567**

(43) Veröffentlichungstag der Anmeldung: **10.12.80**
**Patentblatt 80/25**

(84) Benannte Vertragsstaaten: **DE FR GB IT**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Dürsch, Walter, Dr., In der Braubach 4, D-6240 Königstein/Taunus (DE)**
Erfinder: **Linke, Fritz, Dr,, Im Flemetz 8, D-6240 Königstein/Taunus (DE)**
Erfinder: **Martini, Thomas, Dr., Am Schellberg 42, D-6232 Bad Soden am Taunus (DE)**

(54) **Kondensate aus Addukten von Phosphiten und Propen-2-olen und deren Herstellung.**

(57) Kondensate aus Addukten von Phosphiten und Propen-2-olen, wobei diese Kondensate erhalten werden durch Umsetzung von Phosphiten der allgemeinen Formel I

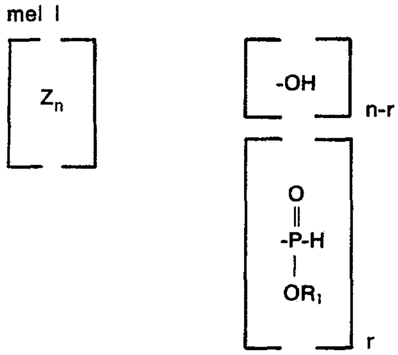

(I)

wobei
n Zahlen von 1 bis 6, r Zahlen von 1 bis n, $R^1$ einen Alkylrest und $Z_n$ einen n-wertigen Rest bedeuten, bei Temperaturen von 80 bis 180°C, in Gegenwart von Peroxiden mit 0,7 bis 2,2 Molen von Propen-2-olen der allgemeinen Formel II

$$CHR^2 = CR^3\text{-}CR^4R^5\text{-}OH, \qquad (II)$$

pro Phosphorwasserstoffverbindung, wobei $R^2$, $R^3$, $R^4$ und $R^5$ Wasserstoff oder Methyl bedeuten. Die erhaltenen Kondensationsprodukte sind wertvolle Zwischenprodukte für die Herstellung von Flammhemmitteln. Ausserdem können sie als Thermosolierhilfsmittel für die Applikation optischer Aufheller dienen.

EP 0 019 751 A1

HOECHST AKTIENGESELLSCHAFT HOE 79/F 110 Dr.OT/jk

# Kondensate aus Addukten von Phosphiten und Propen-2-olen und deren Herstellung

Die Herstellung von 2-Methoxi-, von 2-Ethoxi- und von 2-Phenoxi-2-oxo-1-oxa-2-phospholan durch Abspaltung von Alkylhalogenid aus 3-Halogen-propan-phosphonsäurediestern ist bekannt.
Die Ausbeuten liegen jedoch nur bei ca. 20 bis 23 % (J. Am. Soc. 87,2, S. 255 (1965), J. Am. Soc. 88,2, S. 3431 bis 3433 (1966) und Z. Chem. 15. Jg., Heft 2 (1975)).

Auch die Herstellung von 2-Methyl-2-oxo-1-oxa-2-phospholan durch Addition von Allylalkohol an Methanphosphonigsäureisobutylester und nachfolgender Abspaltung von Isobutanol ist vorbeschrieben (Liebigs Ann. Chem. 1974, 741 - 750). Gemäß DE-OS 23 44 197 (Beispiel 10) kann durch Einwirkung von zwei Mol Diäthylphosphit auf ein Mol Allylalkohol und Destillation über einen Dünnschichtverdampfer und anschließende Kurzwegdestillation der 3-Hydroxi-propanphosphonsäure-diäthylester in 76 %iger Ausbeute hergestellt werden. Äthanol wird dabei nicht abgespalten.
Es war daher sehr überraschend, daß dennoch Alkohole, auch ausgehend von Dialkylphosphiten, abgespalten werden können.

Gegenstand der Erfindung sind neue Kondensationsprodukte aus Addukten von Phosphiten und Propen-2-olen, die dadurch charakterisiert sind, daß man sie gemäß dem folgenden Verfahren erhält. Dieses Verfahren besteht darin, daß Phosphite der allgemeinen Formel I

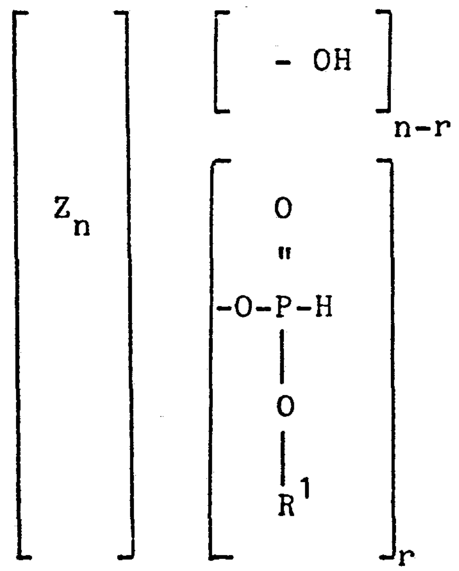

(I)

,

wobei

n   1 bis 6, bevorzugt 1 bis 4, besonders bevorzugt 1,

r   1 bis n, bevorzugt 1,

$R^1$   geradkettig oder verzeigte Alkylreste mit 1 bis 6, bevorzugt 1 bis 2 Kohlenstoffatomen,

$Z_n$   n-wertige, geradkettige oder verzweigte Reste von aliphatischen, aromatischen oder araliphatischen Alkoholen mit 1 bis 22 Kohlenstoffatomen, die auch durch Sauerstoffbrücken unterbrochen sein können, bevorzugt n-wertige Alkylreste mit 1 bis 6 Kohlenstoffatomen, besonders bevorzugt einwertige Alkylreste mit 1 bis 4 Kohlenstoffatomen bedeuten,

bei Temperaturen von 80 bis 180°C, bevorzugt 110 bis 150°C, in Gegenwart von Peroxiden mit 0,7 bis 2,2 Molen, bevorzugt 0,9 bis 1,2 Molen von Propen-2-olen der allgemeinen Formel II

$$CHR^2=CR^3-CR^4R^5-OH, \qquad (II)$$

pro Phosphorwasserstoffbindung wobei $R^2$, $R^3$, $R^4$ und $R^5$ Wasserstoff oder Methyl, bevorzugt Wasserstoff bedeuten, unter gleichzeitiger oder nachträglicher thermischer Abspaltung von Alkoholen der

Formel

$R^1$ - OH

umgesetzt werden.

An Dialkylphosphiten der Formel I kommen beispielsweise in Betracht: Di-n-pentyl-phosphit, Di-n-hexyl-phosphit, Methyl-n-octadecyl-phosphit, Methyl-n-dodecyl-phosphit, Methyl-2-äthyl-hexyl-phosphit, Äthyl-dodecyl-phosphit, Benzylmethyl-phosphit, 2-Phenoxi-äthyl-methyl-phosphit. Bevorzugt sind die Umesterungsprodukte von mehrwertigen Alkoholen mit $C_1$-bis $C_4$-Dialkyl-Phosphiten, wie z.B.

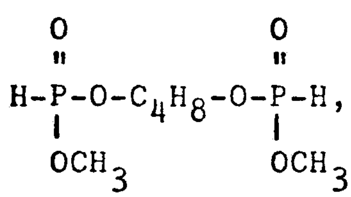 , 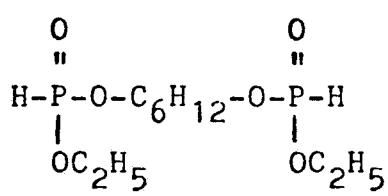 ,

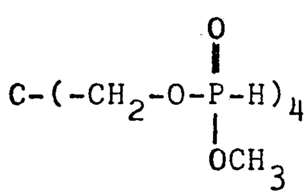 , 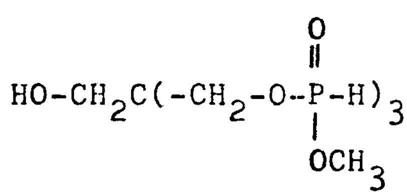 ,

besonders bevorzugt sind Di-n-butyl-phosphit, Di-isobutyl-phosphit, Di-n-propyl-phosphit, Di-iso-propyl-phosphit, Di-äthyl-phosphit und vor allem Dimethylphosphit.

An Propen-2-olen der Formel II sind beispielsweise geeignet: 2,3-Dimethyl-propen-2-ol, 1,1,2-Trimethylpropen-2-ol, bevorzugt 2-Methyl-propen-2-ol (= Methallylalkohol) und besonders bevorzugt Allylalkohol. Die

Mol-Verhältnisse zwischen den Phosphiten der Formel I und den Propen-2-olen der Formel II sind so beschaffen, daß pro Phosphorwasserstoffbindung 0,7 bis 2,2, bevorzugt 0,9 bis 1,2 Mole der Propen-2-ole eingesetzt werden. An Peroxid-Katalysatoren kommen z. B. in Frage: Di-t.-butyl-peroxid, Di-benzoyl-peroxid und bevorzugt t.-Butyl-peroxi-benzoat und t.-Butyl-peroxi-2-äthylhexanoat. Die Mengen an zugesetzen Katalysatoren bewegen sich zwischen 0,5 und 10 %, bevorzugt 1 bis 4 %, bezogen auf das Gesamtgewicht der Reaktionspartner.

Die Reaktionstemperaturen liegen je nach Zersetzungstemperatur der Katalysatoren und der Art der gewünschten Kondensate zwischen 80 und 180°C, bevorzugt zwischen 100 und 150°C. Bei den Reaktionszeiten ist zu unterscheiden zwischen der Dauer der Addition der Phosphite der Formel I und der Propen-2-olen der Formel II und der Nachheizzeit zur Abspaltung der Alkohole. Die Additionsdauer liegt zwischen 30 Minuten und 20 Stunden, bevorzugt zwischen 2 und 8 Stunden.

Die Nachheizzeiten zur Abspaltung der Alkohole beträgt je nach abzuspaltendem Alkohol zwischen 30 Minuten und 10 Stunden, bevorzugt zwischen einer Stunde und vier Stunden. Dabei wirkt sich vor allem, wenn höher siedende Alkohole wie besonders $C_4$-Alkohole, abgespalten werden sollen, das Anlegen eines Vacuums von ca. 1 bis 500 mbar, bevorzugt 10 bis 150 mbar günstig aus. Besonders, wenn R = $CH_3$ ist, wird bereits während der Addition ein Teil des Alkohols abgespalten. Er muß zur Aufrechterhaltung der Reaktionstemeperatur von über 100°C über eine Kolonne abdestilliert werden.

Die Addition der Propen-2-ole II an die Phosphite I wird zweckmäßigerweise in der Weise durchgeführt, daß die Phosphite I unter Überleiten von Stickstoff auf Reaktionstemperatur erhitzt und die Propen-2-ole, gemicht mit dem Peroxid-Katalysator innerhalb der Additionszeit zugetropft werden. Anschließend empfiehlt sich zur Vervollständigung der Reaktion eine nochmalige Zugabe von etwas reinem Katalysator innerhalb von z.B. 2 bis 30 Minuten.

Die so erhaltenen Kondensationsprodukte bestehen aus Gemischen von Verbindungen der Formel III

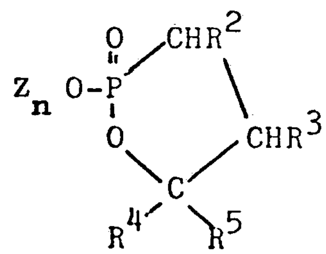

(III)

und davon abgeleiteten Oligo-Addukten. Die Monomere der Formel III, die aus den primär anfallenden Addukten IV

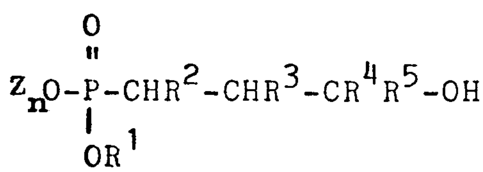

(IV)

durch Abspaltung der Alkohole $R^1OH$ entstehen, können im Vakuum aus den beanspruchten Kondensationsprodukten herausdestilliert werden.

Die erfindungsgemäßen Kondensationsprodukte sind wertvolle Zwischenprodukte für die Herstellung z. B. von Flammhemm-Mitteln. Außerdem haben sich die Kondensationsprodukte, die nach dem vollständigen Abdestillieren des Alkohols $R^1OH$ und überschüssiger flüchtiger Ausgangsverbindungen zurückbleiben, nach Beseitigung eventuell auftretender saurer Anteile als Thermosolierhilfsmittel für optische Aufheller bewährt. Diese sauren Anteile,

die durch freie -P(O)OH Gruppen verursacht werden, nehmen mit steigenden Reaktionstemperaturen zu. Sie können bei Temperaturen von 50 bis 180°, bevorzugt 90 bis 150°C z. B. durch Umsetzung mit Alkylenoxiden der Formel V

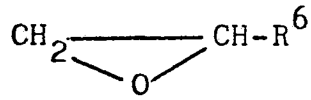 , (V)

wobei $R^6$ aliphatische oder aromatische Reste, mit 1 bis 10 Kohlenstoffatomen, bevorzugt Methyl oder Chlormethyl und besonders bevorzugt Wasserstoff bedeuten, beseitigt werden. Für einen Einsatz als Flammhemm-Mittel empfiehlt es sich, die in den derart resultierenden neutralen Reaktionsprodukten noch vorhandenen Verbindungen der Formel III durch Zugabe von z. B. Natriummethylatlösung in Methanol zu öffnen und an die Hydroxylgruppen zu addieren. Charakteristische Größen für die daraus resultierenden Hydroxylgruppen enthaltenden Reaktionsprodukte sind die Phosphorgehalte und die Hydroxylzahlen. Sie sind maßgebend für einen Einsatz als Flammhemm-Mittel z. B. für textile Bodenbeläge.

BEISPIEL 1

Zu 440,2 g (4 Mol) Dimethylphosphit werden unter Überleiten von Stickstoff innerhalb von 4 Stunden bei 130 bis 138 °C 232,3 g (4 Mol) Allylalkohol, in dem 20 g t.-Butyl-peroxi-benzoat gelöst sind, zugetropft. Am Schluß werden nochmals 3 g des Katalysators in reiner Form innerhalb von 3 Minnuten zugefügt und weitere 20 Minuten nachgerührt. Bereits gegen Mitte der Allylalkoholzugabe destillieren 81 g in eine Vorlage und 5 g in eine Kältefalle. Bei 75°C wird anschließend ein Vacuum von 8 bis 15 mbar angelegt. Dabei destillieren weitere 12 g die Vorlage und 40 g die Kältefalle. Insgesamt werden 138 g

eines Destillats erhalten, das gemäß Gaschromatogramm u. a. 76,3 % Methanol, 12,9 % Allylalkohol und 4,5 % Dimethylphosphit enthält. Es verbleiben 553 g eines Rohproduktrückstandes vom P-Gehalt 21,9 % und der Säurezahl 56,5.

In 300 g (enthaltend 2,17 Gramm-Atome Phosphor) dieses Rohproduktrückstandes wird bei Gegenwart von 0,2 g Soda als Katalysator bei 100 bis 110°C Äthylenoxid eingeleitet, bis die Säurezahl auf 3,0 abgefallen ist. Nach dem Anlegen eines Wasserstrahlvacuums von 30 mbar werden 306 g eines gelblichen Öls ausgewogen. Die Elementaranalyse ergibt: C = 35,8 %, H = 6,8 %, P = 21,0 %. Die Hydroxylzahl liegt bei -2, da das vorhandene 2-Methoxi-2-oxo-1-oxa-2-phospholan (= MOP) die Bestimmung der Hydroxylzahl mit Essigsäureanhydrid stört. Durch Zugabe von 6 g einer 33 %-igen Natriummethylatlösung in Methanol bei 30°C wird das MOP geöffnet. Es resultiert eine Hydroxylzahl von 96. P = 20,7 %, $n_D^{20}$=1,4709.

Werden 231 g des Rohproduktrückstandes zunächst bei 0,5 bis 07, mbar ohne Kolonne destilliert (Übergang 90 bis 110°C), so resultieren 154 g Destillat und 61 g eines viskosen Rückstandes. In der Kühlfalle liegen vor 16 g eines Gemisches bestehend aus 53 % Methanol, 10,3 % Allylalkohol und 30,2 % Dimethylphosphit. Beim nochmaligen Destillieren des Hauptlaufes über eine 60 cm Silbermantel-Vigreux-Kolonne gehen 32 g Vorlauf und 108 g eines Hauptlaufes von 2-Methoxi-2-oxo-1-oxa-2-phospholan über (Kp 1,0 = 90 - 93°C). Dies entspricht einer Ausbeute von 47,5 % der Theorie. Theoretische Ausbeute = 227,1 g. Molekulargewicht = 136,09. $C_4H_9O_3P$

Berechnet: C 35,3 H 6,7 P 22,8

Gefunden: C 35,3 H 6,7 P 22,6

BEISPIEL 2

Zu 440,2 g (4 Mol) Dimethylphosphit wird unter Stickstoff bei 130 bis 140°C innerhalb von 3 Stunden die Mischung aus 243,6 g (4,2 Mol) Allylalkohol und 12 g t.-Butyl-peroxi-benzoat als Radikalspender zugetropft. Bereits nach kurzer Zeit destillieren bei Normaldruck über eine 30 cm lange Vigreux-Kolonne vorwiegend Methanol und überschüssiger Allylalkohol ab. Nach Ende der Zugabe werden zur Vervollständigung der Reaktion innerhalb von 10 Minuten nochmals 3 g Katalysator zugefügt und weitere 30 Minuten nachgerührt. Insgesamt werden 128 g bei Normaldruck abdestilliert. Dann wird bei 180°C ein Vacuum von 30 mbar angelegt. Dabei destillieren nochmals 15 g in eine mit Kohlendioxid/Isopropanol gekühlte Kältefalle. Es werden 547 g Rückstand erhalten. Seine Säurezahl (in mg KOH pro Gramm) liegt bei 68. $n_D^{20}$=1,4738. Bei 90 bis 100°C werden anschließend 28 g (0,64 Mol) Äthylenoxid eingeleitet. Dabei fällt die Säurezahl des erhaltenen gelblichen Öls bis auf 2,0 ab. Die Hydroxylzahl (in mg KOH pro Gramm) liegt bei 69, der Phosphorgehalt bei 21,3 %, der Brechungsindex $n_D^{20}$ = 1,4767.

BEISPIEL 3

136,2 g Pentaerythrit, 396 g (3,6 Mol) Dimethylphosphit und 4 g Soda werden einem Vacuum von 130 bis 110 mbar 3 Stunden auf 90 bis 110°C erhitzt. Dabei destillieren über eine 20 cm Vigreux-Kolonne 128 g einer Mischung aus 95,8 % Methanol (= 3,84 Mol) und 3,7 % Dimethylphosphit (0,047 Mol) ab. Es hinterbleiben 408 g eines mehrwertigen Phosphits mit einer Säurezahl von 4,5 und der Jodzahl 140. Zu diesem Phosphit werden unter Stickstoff bei 120 bis 128°C innerhalb von 4 Stunden 243,9 g (4,2 Mol) Allylalkohol, gemischt mit 20 g t.-Butyl-peroxi-2-äthylhexanoat, zugetropft. Nach Zugabe von 4 g des reinen Katalysators innerhalb von 5 Minuten wird noch eine

Stunde nachgerührt. Bereits während der Allylalkoholzugabe destillieren 64,5 g ab. Nach Anlagen eines Vacuums von 3 mbar werden bei 100°C weitere 58 g in der Kältefalle aufgefangen. Das Gesamtdestillat von 127,5 g enthält 48,5 % Methanol (= 1,93 Mol) und 46,3 % Allylalkohol (= 1,02 Mol). Es hinterbleiben 540 g eines Rohproduktrückstandes mit einer Säurezahl von 32 und einem Phosphorgehalt von 19,9 %. Durch zweistündiges Einleiten von Äthylenoxid bei 120°C in Gegenwart von 0,6 g Soda wird die Säurezahl auf 2 herabgedrückt. Die Gewichtszunahme beträgt 8 g.

P = 19,3 %. Die Hydroxylzahl liegt bei 210.

PATENTANSPRUCH

Kondensate aus Addukten von Phosphiten und Propen-2-olen, dadurch gekennzeichnet, daß diese Kondensate erhalten werden durch Umsetzung von Phosphiten der allgemeinen Formel I

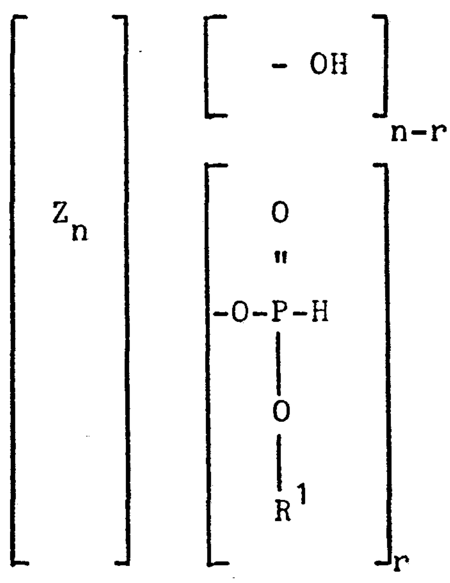

(I)

,

wobei

n 1 bis 6, bevorzugt 1 bis 4, besonders bevorzugt 1,

r 1 bis n, bevorzugt 1,

$R^1$ geradkettig oder verzeigte Alkylreste mit 1 bis 6, bevorzugt 1 bis 2, Kohlenstoffatomen,

$Z_n$ n-wertige, geradkettige oder verzweigte Reste von aliphatischen, aromatischen oder araliphatischen Alkoholen mit 1 bis 22 Kohlenstoffatomen, die auch durch Sauerstoffbrücken unterbrochen sein können, bevorzugt n-wertige Alkylreste mit 1 bis 6 Kohlenstoffatomen, besonders bevorzugt einwertige Alkylreste mit 1 bis 4 Kohlenstoffatomen bedeuten,

bei Temperaturen von 80 bis 180°C, bevorzugt 110 bis 150°C, in Gegenwart von Peroxiden mit 0,7 bis 2,2 Molen, bevorzugt 0,9 bis 1,2 Molen von Propen-2-olen der allge-

meinen Formel II

$$CHR^2=CR^3-CR^4R^5-OH, \qquad (II)$$

pro Phosphorwasserstoffbindung wobei $R^2$, $R^3$, $R^4$ und $R^5$ Wasserstoff oder Methyl, bevorzugt Wasserstoff bedeuten, unter gleichzeitiger oder nachträglicher thermischer Abspaltung von Alkoholen der Formel $R^1$ - OH.

Europäisches Patentamt

# EUROPÄISCHER RECHERCHENBERICHT

0019751

Nummer der Anmeldung

EP 80 10 2446.4

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| | US - A - 4 052 486 (HOECHST)<br>* Anspruch 1; Spalte 2 *<br>-- | 1 | C 07 F 9/40 |
| | US - A - 2 724 718 (SHELL DEVELOPMENT COMPANY)<br>* Beispiel 9 *<br>-- | | |
| A | DE - A - 2 127 821 (HOECHST)<br>-- | | **RECHERCHIERTE SACHGEBIETE (Int. Cl.3)** |
| A | US - A - 2 648 695 (SHELL DEVELOPMENT COMPANY)<br>-- | | C 07 F 9/30<br>C 07 F 9/40 |
| D | DE - A1 - 2 344 197 (DYNAMIT NOBEL)<br>-- | | |
| D | LIEBIGS ANN. CHEM., Nr. 5, 1974 Frankfurt<br>M. Finke et al."Herstellung einfacher Phosphinsäurederivate"<br>Seiten 741 bis 750<br>---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 01-09-1980 | KAPTEYN |